# EUROPEAN PATENT APPLICATION

(11) **EP 3 901 034 A1**
(43) Date of publication of application: **27.10.2021**
(21) Application number: 21169254.6
(22) Date of filing: 19.04.2021
(51) Int. Cl.: B64C 27/26

(54) **COMPOUND ROTOR AIRCRAFT**

(30) Priority: 20.04.2020 CN 202010314058; 20.04.2020 CN 202010313147; 20.04.2020 CN 202010313140; 20.04.2020 CN 202010314051; 20.04.2020 CN 202010313166
(71) Applicant: Air Taxi Science and Technology Company Limited, Beijing 100055 (CN)
(72) Inventor: ZHANG, Kai, Hebei (CN); ZHANG, Shilong, Hebei (CN); GE, Hang, Hebei (CN); WANG, Tianning, Hebei (CN); ZHANG, Jiechao, Hebei (CN)
(74) Representative: Ström & Gulliksson AB

(57) **Abstract**

The present invention relates to the field of aircrafts, and provides a compound rotor aircraft, which comprises a fuselage, a lifting rotor, wings and thrust propellers, wherein the fuselage has a cabin for driving; the lifting rotor is configured to drive the fuselage to move in the vertical direction; a plurality of wings are provided and arranged symmetrically on the two sides of the fuselage; a plurality of thrust propellers are provided and arranged on the plurality of wings respectively, and are configured to provide horizontal thrust force to the fuselage to drive the aircraft to move in the horizontal direction. The aircraft has various flight modes such as helicopter mode, compound helicopter mode, gyrocopter mode, compound gyrocopter mode and fixed-wing cruising mode, and can be transited among the modes. In the case of power failure of the lifting rotor, the aircraft can be transited into a gyrocopter state and continue the flight safely. The aircraft not only can take off and land vertically, but also can cruise at high speed efficiently, and has high safety. The aircraft provided by the present invention can effectively improve the travel efficiency and life quality of people.

## Description

### FIELD

The present invention relates to the technical field of aircrafts, in particular to a compound rotor aircraft.

### BACKGROUND

Owing to the fact that the quantity of automobiles increases with years but the annual growth rate of roads can't keep up with the annual growth rate of automobiles, the resultant traffic congestion has strong impact on the travel line efficiency and quality of life of people. At present, in order to solve the problem of traffic congestion, researches are made mainly on automatic driving and intelligent networking techniques to improve the load factor of motor vehicles and decrease the quantity of motor vehicles in the hope of mitigating traffic congestion to a certain degree. However, the research payoffs have very limited contribution to mitigation of traffic congestion. The present invention aims at providing a new way of travel, which can effectively improve the travel line efficiency and quality of life of people.

Processing from the actual requirements for Urban Air Mobility (UAM), it is desirable that the aircrafts have vertical takeoff and landing function and the highest safety standard. Although the existing multi-rotor aircrafts and helicopters can take off and land vertically, they have poor cruising efficiency, and their safety performance can't be ensured effectively.

### SUMMARY

In view of the above problems, the object of the present invention is to provide an aircraft that can take off and land vertically, cruise efficiently and safely at a high speed, and effectively improve the travel efficiency and quality of life of people.

An aircraft, comprising a fuselage, a lifting rotor, wings, and thrust propellers, wherein:
the fuselage has a cabin for pilots and passengers;
the lifting rotor is configured to drive the fuselage to move in the vertical direction, and can adjust its collective pitch and the attack angle of the rotor disc;
a plurality of wings are provided and arranged symmetrically on the two sides of the fuselage;
a plurality of thrust propellers are provided and arranged on the plurality of wings respectively, and are configured to provide horizontal thrust force to the fuselage to drive the aircraft to move in the horizontal direction.

The aircraft has various flight modes such as helicopter mode, compound helicopter mode, gyrocopter mode, compound gyrocopter mode and fixed-wing cruising mode, and can be transited among the modes. In the case of power failure of the lifting rotor, the aircraft can be transited into a gyrocopter state and continue the flying safely. The aircraft not only can take off and land vertically, but also can cruise at high speed efficiently, and has high safety. The aircraft provided by the present invention can effectively improve the travel efficiency and life quality of people.

### BRIEF DESCRITION OF THE DRAWINGS

The accompanying drawings, which constitute a part of the present invention, are provided to facilitate further understanding the present invention; the illustrative embodiments and associated description in the present invention are provided to explain the present invention, and shall not be deemed as constituting any undue limitation to the present invention. In the figures:
Fig. 1 is a perspective view of the aircraft in an embodiment of the present invention;
Fig. 2 is a schematic structural diagram of the aircraft in the helicopter hovering state in an embodiment of the present invention;
Fig. 3 is a schematic structural diagram of the aircraft in the compound helicopter state in an embodiment of the present invention;
Fig. 4 is a schematic structural diagram of the aircraft in the compound gyrocopter state in an embodiment of the present invention;
Fig. 5 is a schematic structural diagram of the aircraft in the fixed-wing cruising state in an embodiment of the present invention;
Fig. 6 is a schematic structural diagram of the aircraft in the gyrocopter state in an embodiment of the present invention;
Fig. 7 is a schematic diagram of the direction of rotation of the thrust propeller of the aircraft in an embodiment of the present invention;
Fig. 8 is a schematic diagram of the lifting rotor driving mechanism of the aircraft in an embodiment of the present invention;
Fig. 9 is a schematic diagram of the transition of the aircraft among the states of flight in an embodiment of the present invention;
Fig. 10 is a schematic diagram of the transition of the aircraft from the helicopter hovering state to the compound helicopter state in an embodiment of the present invention;
Fig. 11 is a schematic diagram of the transition of the aircraft from the helicopter hovering state to the compound gyrocopter state in an embodiment of the present invention;
Fig. 12 is a schematic diagram of the transition of the aircraft from the helicopter hovering state to the fixed-wing cruising state in an embodiment of the present invention;
Fig. 13 is a ration diagram of the transition of the aircraft from different states to the gyrocopter state in the case of power failure of the lifting rotor in an embodiment of the present invention;
Fig. 14 is a force analysis diagram of the aircraft in the helicopter hovering state in an embodiment of the present invention;
Fig. 15 is a force analysis diagram of the aircraft in the compound helicopter state in an embodiment of the present invention;
Fig. 16 is a force analysis diagram of the aircraft in the compound gyrocopter state, fixed-wing cruising state, or gyrocopter state in an embodiment of the present invention;
Fig. 17 is a schematic diagram of the generation of lifting force by the wings of the aircraft in an embodiment of the present invention.

### Reference Numbers:

100 - fuselage; 200 - lifting rotor; 210 - rotor shaft; 220 - lifting rotor blade; 300 - wing; 400 - thrust propeller; 410 -the first thrust propeller; 420 -the second thrust propeller; 430 -the third thrust propeller; 440 -the fourth thrust propeller; 510 - reducer; 520 - clutch; 600 - tail wing; 610 - vertical tail; 620 - horizontal tail; 630 - yaw rudder; 640 - elevator; 700 - landing gear.

### DETAILED DESCRIPTION

It should be noted that the embodiments and the features in the embodiments can be combined freely, provided that there is no confliction among them.

In addition, the term "vertical" mentioned in the embodiments of the present invention refers to a direction perpendicular to the horizontal direction. The term "riding" mentioned in the embodiments of the present invention involves driving riding state and non-driving riding state; for example, in the usage occasions where manual manipulation of the aircrafts are required, "riding" involves a driving state; in usage occasions where automatic driving is available, "riding" may only involve a non-driving riding state.

Hereunder the present invention will be detailed in embodiments with reference to the accompanying drawings.

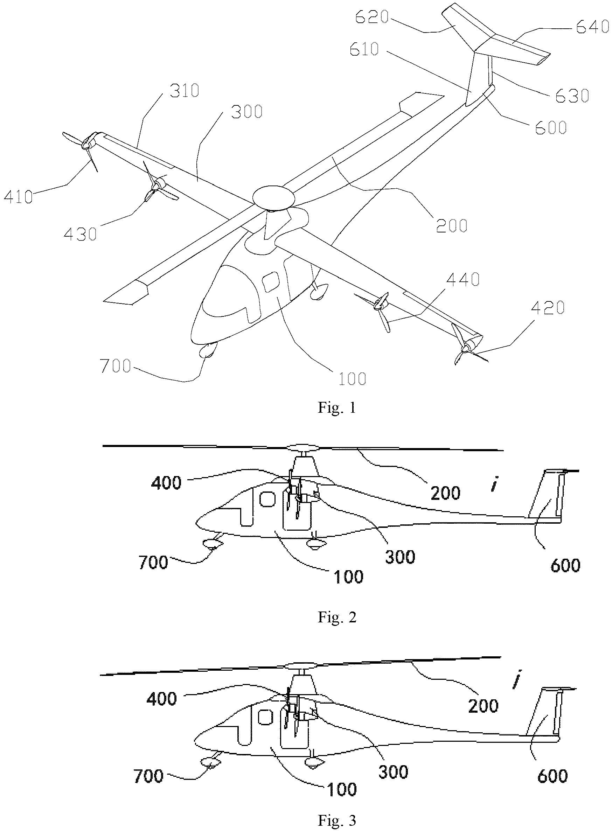

As shown in Fig. 1, the compound rotor aircraft provided by the present invention comprises a fuselage 100, a lifting rotor 200, wings 300 and thrust propellers; the fuselage 100 has a cabin for riding; in an embodiment of the present invention, the lifting rotor 200 is arranged at the top of the fuselage 100; of course, in other embodiments of the present invention, the lifting rotor 200 may be arranged at other positions of the fuselage 100. The lifting rotor 200 can provide lifting force in the vertical direction to drive the aircraft to move in the vertical direction, and can provide a force component in the horizontal direction to drive the aircraft to move in the horizontal direction as well by adjusting the inclination angle between the plane of rotation of the lifting rotor 200 and the horizontal plane; a plurality of wings 300 are provided and arranged symmetrically on the two sides of the fuselage 100. A plurality of thrust propellers are provided and arranged on the plurality of wings 300 respectively, and the plurality of thrust propellers can provide thrust force in the length direction (forward or backward) of the fuselage. During use, the user sits in the cabin of the fuselage 100, and drives the fuselage 100 to move in the vertical direction (e.g., take off or land) by means of the lifting rotor 200; since it is unnecessary to taxi on the runway when taking off or landing with the lifting rotor 200, the flexibility of use of the aircraft is greatly improved, and the aircraft can be widely used under urban road conditions. After the aircraft takes off vertically by means of the lifting rotor 200, the fuselage 100 can be driven with the thrust propellers to move in the horizontal direction; of course, alternatively the fuselage 100 may be driven to move in the horizontal direction by altering the included angle between the plane of rotation of the lifting rotor 200 and the horizontal plane. Since the thrust propellers provide driving force in the horizontal direction directly to the fuselage 100, the aircraft provided by the present invention can take flight actions in the horizontal direction more efficiently and flexibly and can cope with more complex flight routes. Thus, the aircraft is especially suitable for travel in daily life. In addition, since the lifting rotor 200 generates torque on the fuselage 100 when it is driven to rotate, the fuselage 100 will have certain deflection. In order to prevent the deflection of the fuselage 100, the thrust propellers may be started while the lifting rotor 200 rotates, and the difference in thrust force between the thrust propellers on the two sides of the fuselage 100 may be adjusted to balance off the torque generated by the lifting rotor 200 on the fuselage 100 (the difference in thrust force between the thrust propellers may be adjusted by adjusting the rotation speeds of the thrust propellers or adjusting the collective pitch of the thrust propellers), thereby the deflection of the fuselage 100 can be prevented. Therefore, the thrust propellers may be started after the aircraft takes off to the air or started simultaneously with the lifting rotor 200.

The plane of rotation of the lifting rotor 200 is a rotor disc, and the included angle between the rotor disc and the fuselage may be adjusted; that is to say, the angle of the plane of the rotor disc with respect to the aircraft may be adjusted in different directions. For example, the plane of the rotor disc of the lifting rotor 200 may be adjusted by means of an existing rotor controller; especially, the attack angle of the rotor disc is the included angle between the rotor disc and the forward flight direction, and the forward tilt and backward tilt of the rotor disc may be adjusted by adjusting the attack angle of the rotor disc; at the same time, the collective pitch of the lifting rotor 200 may be changed. The collective pitch is also referred to as the collective pitch angle, and is the inclination of the blades with respect to the plane of rotation; the lift force of the lifting rotor 200 can be changed by changing the collective pitch under the condition of the same rotation speed; zero-lift collective pitch means the lift force generated by the lifting rotor 200 is negligible under the collective pitch setting.

It should be noted that the aircraft provided by the present invention is applicable to urban road conditions where no special aircraft runway is available since the aircraft can take off and land vertically. After the aircraft provided by the present invention takes off to the air by means of the lifting rotor 200, the included angle between the plane of rotation of the lifting rotor 200 and the horizontal plane may be adjusted to drive the aircraft to move in the horizontal direction, or the thrust propellers may directly apply driving force in the horizontal direction to the fuselage 100 to drive the aircraft to move in the horizontal direction.

It should be understood that the lifting, lowering, and flying actions of the aircraft can be realized simply by means of the lifting rotor 200 in cooperation with the thrust propellers, if energy saving is not a consideration or the power is continuous and sufficient.

In addition, the plurality of wings 300 must be arranged symmetrically on the two sides of the fuselage 100 to ensure balanced flight. The quantity of the wings 300 includes, but is not limited to two wings. For example, the Airbus conceptual aircraft model RACER employs a four-wing design: two wings are arranged on each side of the fuselage respectively; the two wings on the same side of the fuselage are interconnected, so that the two wings and the fuselage form an approximately triangular structure. In an embodiment of the present invention, the aircraft includes two wings 300 arranged on the two sides of the fuselage 100 and a plurality of thrust propellers arranged on the two wings 300 respectively. In this embodiment, since two wings 300 are symmetrically arranged on the two sides of the fuselage 100, the aircraft can generate lifting force by means of the interaction between the wings 300 and the air flow, thus the load on the lifting rotor 200 is reduced partially. After the aircraft reaches certain flight speed, even the lifting rotor 200 can be fully unloaded and the aircraft can still keep flying if the wings 300 cooperate with the air flow ideally.

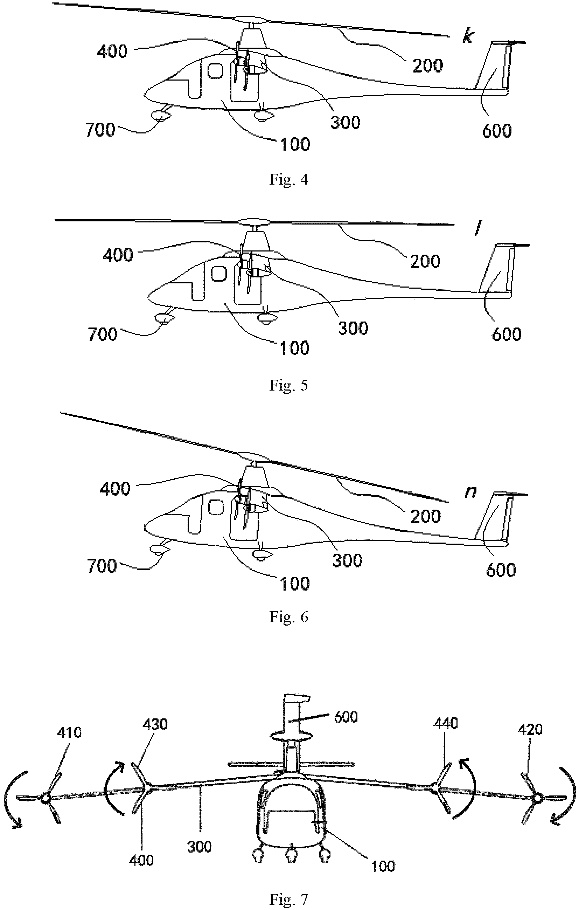

In an embodiment of the present invention, as shown in Fig. 7, the wings 300 have a certain dihedral angle, and the position of the thrust line (i.e., the direction of the thrust vector) of the thrust propellers arranged on the wings 300 with respect to the fuselage 100 can be changed by adjusting the dihedral angle, thereby a function of adjusting the overall balance of the aircraft can be realized. Of course, the wings 300 may also be tilted upward at a certain angle with respect to the horizontal direction, which is not described anymore here.

In consideration of the limitation on the length of the runway and the stalling speed, the performance of the wings in low speed states has to be considered in the design of the wings of aircrafts in the prior art, and the wings have to be designed to be capable of providing all lifting force in low speed states; consequently, the wings can't have a great aspect ratio. In contrast, in the aircraft provided by the present invention, since the lifting rotor 200 mainly provides the lifting force in the low speed state while the wing 300 only provides the lifting force required in the high speed flight stage, it is unnecessary to consider the low-speed performance of the wings 300. Therefore, the area of the wings 300 is reduced, and the aspect ratio λ may be designed to be λ≥10. The aspect ratio design of the wings 300 in the present invention effectively improves the lift-drag ratio of the wings 300 in the high-speed flight stage, thereby improves the cruising efficiency of the aircraft. In addition, during low-speed flight, with the increase of the aspect ratio, the lift-drag ratio of the aircraft increases as the aspect ratio is increased, thereby the economic efficiency of fuel consumption is improved.

As shown in Fig. 1, in order to adjust the flight attitude of the aircraft conveniently, the wings 300 have ailerons that can be deflected up and down, and the flight attitude adjustment function of the aircraft can be realized by adjusting the deflection of the ailerons.

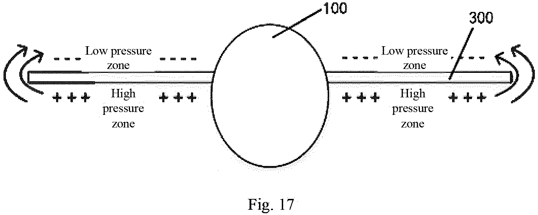

It should be understood that the plurality of thrust propellers may be arranged on the wings 300 or on the fuselage 100. For example, the plurality of thrust propellers may be arranged on the tail part of the fuselage 100, as long as the thrust force generated by the plurality of thrust propellers can keep the aircraft in a balance state. In an embodiment of the present invention, as shown in Fig. 7, a plurality of thrust propellers are respectively arranged on the two wings 300, wherein the plurality of thrust propellers 400 comprise a first thrust propeller 410 and a second thrust propeller 420, which are respectively arranged on the end parts of the two wings 300 away from the fuselage 100, wherein the blades of the first thrust propeller 410 and the blades of the second thrust propeller 420 rotate in opposite directions and can drive the air flow on the end parts of the wings 300 to flow from the top surfaces of the wings 300 to the bottom surfaces of the wings 300. As shown in Fig. 17, in the forward flight process of the aircraft, when the air flow passes through the wing 300, the air flow rates on the top and bottom surfaces of the wing 300 is non-uniform, and the pressure on the bottom surface of the wing 300 is higher because the air flow rate on the bottom surface is lower, while the pressure on the top surface of the wing 300 is lower because the air flow rate on the top surface is higher. Therefore, upward lifting force is generated owing to the pressure difference between the top surface and the bottom surface of the wing 300. Since the pressure distribution on the surfaces of the wing 300 is uneven, the air flow on the end part of the wing 300 away from the fuselage 100 tends to flow from the higher pressure zone to the lower pressure zone, i.e., the air flow tends to flow from the bottom surface of the wing 300 to the top surface of the wing 300; consequently, the aerodynamic efficiency of the wing 300 is decreased. In the present invention, based on the requirement for the directions of rotation of the blades of the first thrust propeller 410 and the blades of the second thrust propeller 420 as shown in Fig. 7, the air flow on the end part of the wing 300 tends to flow from the top surface of the wing 300 to the bottom surface of the wing 300, thereby the decrease of the aerodynamic performance of the wing 300 can be prevented.

In an embodiment of the present invention, the aircraft has four thrust propellers altogether, i.e., the aircraft further comprises a third thrust propeller 430 and a fourth thrust propeller 440 arranged on the two wings 300 respectively, besides the first thrust propeller 410 and the second thrust propeller 420 that are described above. Of course, the quantity of the thrust propellers of the aircraft is not limited to even numbers; alternatively, the quantity of the thrust propellers may be an odd number. For example, in the case of three thrust propellers, one thrust propeller may be arranged on the wing 300 on one side, while two thrust propellers may be arranged on the wing 300 on the other side, and the thrust forces of the three thrust propellers may be adjusted to ensure overall balance of the aircraft; or two thrust propellers may be arranged symmetrically on the wings 300 on the two sides of the fuselage, and a third thrust propeller may be arranged on the fuselage 100 or tail wing 600.

In the above embodiment, to ensure the overall balance of the aircraft, the directions of rotation of the third thrust propeller 430 and the fourth thrust propeller 440 are designed to be opposite to each other, and the thrust forces of the first thrust propeller 410, the second thrust propeller 420, the third thrust propeller 430 and the fourth thrust propeller 440 are adjusted so that the fuselage 100 of the aircraft will not be deflected owing to the reversed torque of the lifting rotor 200.

To facilitate the control of the thrust propellers, optionally the thrust propellers comprise variable pitch propellers, which is to say, the thrust propeller can operate with large stroke and variable pitch, and the included angle between the blades and the plane of rotation can be varied in a wide range. Through such variable-pitch operation, the magnitude and direction of the thrust force of the thrust propeller may be changed without changing the direction and speed of rotation of the thrust propeller. Therefore the control is very convenient.

In an embodiment of the present invention, the aircraft further comprises a driving mechanism for driving the lifting rotor 200. The driving mechanism is configured as follows: when the rotation speed of the lifting rotor 200 is smaller than or equal to a first speed, the driving mechanism is connected with the lifting rotor 200 to drive the lifting rotor 200 to rotate; when the rotation speed of the lifting rotor 200 is greater than the first speed, the driving mechanism is rotor disconnected from the lifting rotor 200. The first speed is the rotation speed of the output shaft of the reducer 510 that will be described below, and may be adjusted specifically according to the reducer 510. That is to say, the driving mechanism should be connected with the lifting rotor 200 to drive the lifting rotor 200 to rotate at the first speed in consideration of energy attenuation when the rotation speed of the lifting rotor 200 is smaller than or equal to the first speed; the driving mechanism not only can't drive the lifting rotor 200 to rotate but also hamper the rotation of the lifting rotor 200 as a load when the rotation speed of the lifting rotor 200 is greater than the first speed. Therefore, the driving mechanism may be rotor disconnected from the lifting rotor 200 without hampering the rotation of the lifting rotor 200.

It should be understood that the driving mechanism may be designed in different forms, as long as it can provide driving force to the lifting rotor 200 and can be separated from the lifting rotor 200. In an embodiment of the present invention, as shown in Fig. 5, the driving mechanism may comprise an engine, a reducer 510 and a clutch 520, wherein the driving shaft of the engine is connected with the reducer 510 so that the output shaft of the reducer 510 can rotate at a first speed, the clutch 520 is connected with the output shaft of the reducer 510, and the clutch 520 is configured as follows: the clutch 520 is connected with the lifting rotor 200 when the rotation speed of the lifting rotor is smaller than or equal to the first speed; the clutch 520 is rotor disconnected from the lifting rotor 200 when the rotation speed of the lifting rotor 200 is greater than the first speed. That function is especially important for ensuring the rotation of the lifting rotor 200 when the engine or reducer 510 fails. Of course, in the aircraft provided by the present invention, the reducer 510 may be driven by a motor or driven by a power source in other forms. The function of the clutch 520 is to connect with the lifting rotor 200 when the rotation speed of the lifting rotor 200 is smaller than or equal to the first speed and rotor disconnect from the lifting rotor 200 when the rotation speed of the lifting rotor 200 is greater than the first speed. The clutch 520 may employ a clutch structure in the prior art, and will not be further detailed here.

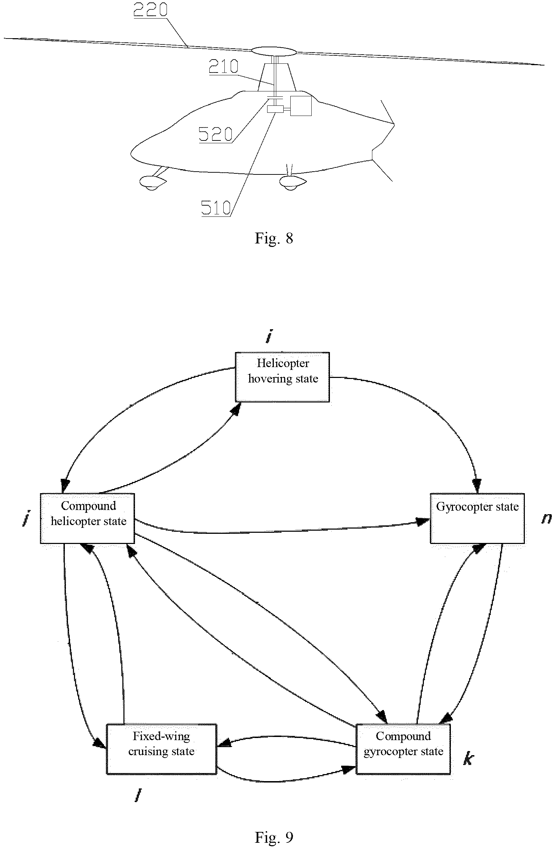

The lifting rotor 200 of the aircraft in the present invention may be designed in different forms, such as a coaxial multi-blade form. In an embodiment of the present invention, as shown in Fig. 8, the lifting rotor 200 comprises a rotor shaft 210, a plurality of blades 220, and a plurality of counterweights in one-to-one correspondence with the plurality of blades 220; the rotor shaft 210 is connected with the clutch 520, the plurality of blades 220 are respectively connected on the rotor shaft 210 and all of the blades 220 are in the same plane, and the counterweight is arranged on one end of each blade 220 away from the rotor shaft 210 to optimize the rotational inertia of the blade 220.

As shown in Fig. 1, the aircraft in the present invention further comprises a tail wing 600 arranged on the tail part of the fuselage 100. The tail wing 600 may be designed as a T-type tail wing comprising a horizontal portion and a vertical portion, an elevator 640 that can be deflected up and down is arranged on the horizontal portion, a yaw rudder 630 that can be deflected left and right is arranged on the vertical portion, the pitch control of the aircraft can be realized by controlling the elevator, and the flight direction of the aircraft can be controlled by controlling the yaw rudder 630.

To facilitate take-off and landing, the aircraft further comprises a landing gear 700 arranged on the bottom of the fuselage 100, and the landing gear 700 comprises a fairing that can reduce the air resistance on the landing gear 700. In an embodiment of the present invention, as shown in Fig. 7, the landing gear 700 employs a three-point wheeled landing gear design, and a fairing is arranged above each wheel, so that the air resistance on the aircraft during the flight can be reduced.

In addition, the aircraft further includes an operating system for controlling the attitude and heading of the entire aircraft and an energy system for providing the energy required for flight. The operating system may be a traditional mechanical operating system or telex operating system; the energy system may be a pure electric energy system (e.g., lithium-ion battery), hydrogen fuel cell system, a traditional fossil energy engine or a hybrid energy system incorporating the above energy sources, typically an oil-electricity hybrid system, i.e., a hybrid energy system with lithium-ion battery and fuel engine.

The aircraft can operate in helicopter hovering state, compound helicopter state, compound gyrocopter state, fixed-wing cruising state, and gyrocopter state respectively; in addition, the aircraft can be transited among the helicopter hovering state, compound helicopter state, compound gyrocopter state, fixed-wing cruising state, and gyrocopter state.

By altering the attack angle, collective pitch and rotation speed of the lifting rotor 200 and controlling the thrust force of the thrust propellers, the aircraft may be controlled to fly in different states, as shown in Figs. 2-6, including helicopter hovering state, compound helicopter state, compound gyrocopter state, fixed-wing cruising state, and gyrocopter state.

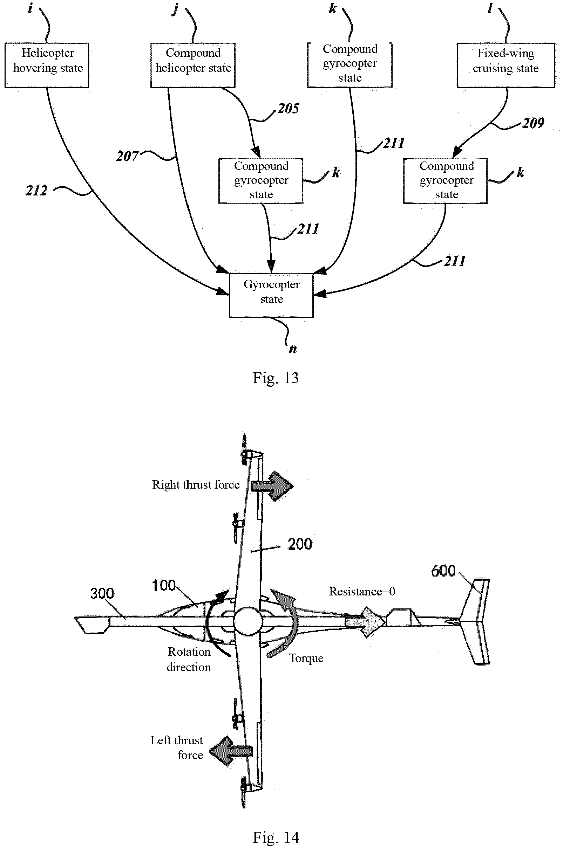

Specifically, in the helicopter hovering state, the lifting rotor 200 rotates at a first rotation speed, the rotor disc is kept in a horizontal state and provides lifting force in the vertical direction, and the collective pitch of the propeller 400 is adjusted according to the real-time reactive torque generated by the lifting rotor 200 to balance the real-time reactive torque. This state is a typical helicopter hovering state, in which the collective pitch of the lifting rotor 200 is high, and the first rotation speed is maintained by driving with the motor, the engine or both of them. The collective pitch is also referred to as collective pitch angle, and is the included angle of the rotor blade with respect to the plane of rotation; the first rotation speed, which is also referred to as takeoff rotation speed or hovering rotation speed, is the rotation speed at which the entire aircraft takes off and hovers. The first rotation speed is relatively high, and is determined by comprehensive parameters including aircraft size and rotor. For example, the first rotation speed may be 300rpm. As shown in Fig. 2, the rotor disc of the lifting rotor 200 is kept horizontal, providing all lifting force in the vertical direction. The reactive torque generated by the lifting rotor 200 is balanced off by adjusting the collective pitch of the left and right thrust propellers 400. A stress diagram in the state is shown in Fig. 14. At that point, the pitch and roll attitude control of the entire aircraft is realized by adjusting the included angle between the rotor disc and the horizontal plane; the yaw control is realized by adjusting the collective pitch (i.e., thrust force) of the left and right thrust propellers 400.

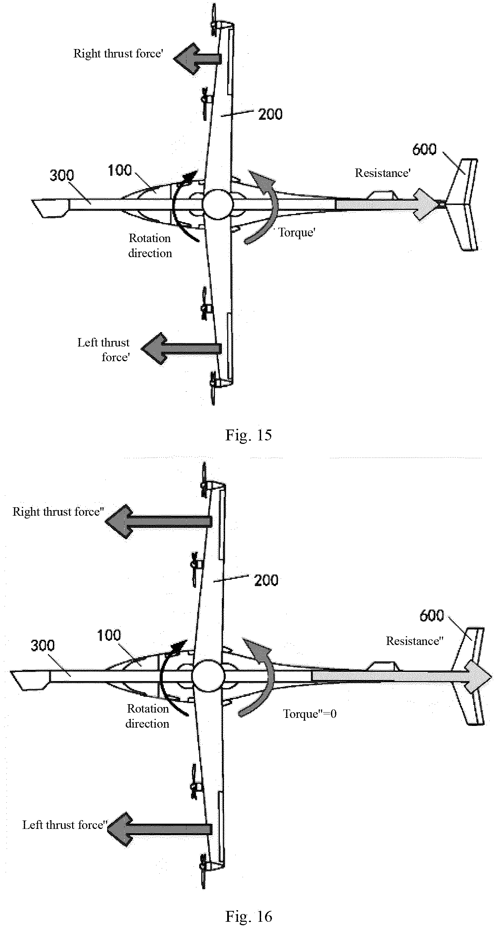

Specifically, in the compound helicopter state, the lifting rotor 200 rotates at a first rotation speed, the rotor disc is tilted forward, the collective pitch of the thrust propellers 400 is adjusted according to the real-time reactive torque generated by the lifting rotor 200 to balance the real-time reactive torque, the lifting rotor 200 and the wings 300 provide lifting force in the vertical direction together, and the component of the force provided by the lifting rotor 200 in the horizontal direction and the thrust propellers 400 provide forward thrust force. This state occurs in flight stages with low forward speed before initial flight acceleration of the aircraft and approach to hover. At that point, the lifting rotor 200 still maintain the first rotation speed state by driving with the motor or engine or both of them, and the rotor disc is tilted forward to improve the efficiency of the lifting rotor 200; the reactive torque generated by the lifting rotor 200 is balanced by adjusting the collective pitch of the left and right thrust propellers 400 (as shown in Fig. 15). In that state, the lifting rotor 200 and the wings 300 provide the lifting force in the vertical direction together, and the lifting rotor 200 is partially unloaded gradually as the forward speed is increased. In that state, the rotation speed of the lifting rotor 200 is maintained at the first rotation speed as in the hovering state, and the rotor thrust force is adjusted by adjusting the collective pitch. The forward thrust of the entire aircraft is composed of the horizontal component of the force of the lifting rotor 200 and the thrust force of the thrust propellers 400. Here, the pitch and roll attitude control of the entire aircraft is mainly realized by adjusting the included angle between the rotor disc and the horizontal plane, and the ailerons 310 and the elevator provide partial attitude control moment as the forward speed is increased; the yaw control is mainly realized by adjusting the collective pitch of the left and right thrust propellers 400, and the yaw rudder provide partial yaw control moment as the forward speed is increased.

Specifically, in the compound gyrocopter state, the rotor disc is tilted backward preliminarily, the air flow passes through the rotor disc from bottom to top to drive the lifting rotor 200 to rotate, the lifting rotor 200 and the wings 300 provide the lifting force in the vertical direction together, and the rotation speed of the lifting rotor 200 is decreased gradually as the forward speed is increased. This state occurs after the aircraft achieves certain forward flight speed and the lifting rotor 200 is transited from the state of actively driving with the driving shaft to a wind-driven autorotation state. At that point, the rotor disc is tilted backward, the air flow passes through the rotor disc from bottom to top, and the lifting rotor 200 is driven by the wind to rotate and doesn't generate reactive torque on the entire aircraft anymore. In that state, the lifting rotor 200 and the wings 300 provide the lifting force in the vertical direction together, and the lifting rotor 200 is further unloaded as the forward speed is increased. In this state, the rotation speed of the lifting rotor 200 is lower than the first rotation speed; in addition, the lifting rotor 200 is further unloaded and the rotation speed is further decreased as the forward speed is increased; the force of the lifting rotor 200 may be adjusted by adjusting the collective pitch of the lifting rotor 200 and the attack angle of the rotor disc. The forward thrust force on the entire aircraft is provided by the thrust propellers 400. At that point, the pitch and roll attitude control of the entire aircraft is realized by adjusting the attack angle of the rotor disc and operating in the conventional fixed-wing aircraft control mode (the ailerons 310 on the wings 300 and the elevator are deflected); the yaw control is mainly realized by the deflection of the yaw rudder.

Specifically, in the fixed-wing cruising state, the collective pitch of the lifting rotor 200 is adjusted to zero-lift collective pitch, the rotor disc is kept horizontal approximately, and the lifting rotor 200 rotates at a second rotation speed, i.e., the lowest rotation speed at which the lifting rotor 200 can rotate stably; the wings 300 provide all lifting force in the vertical direction, and the thrust propellers 400 provide forward thrust force for the entire aircraft. At that point, the entire aircraft is in an optimal lift-drag ratio state. The collective pitch of the lifting rotor 200 is adjusted to zero-lift collective pitch, i.e., the lifting force generated by the lifting rotor 200 is negligible in the collective pitch state; the plane of the rotor disc is also maintained in an approximately horizontal state; in addition, the rotation speed is further decreased, and the lifting rotor rotates approximately at the second rotation speed. In the forward flight process of the entire aircraft, the stress on the blades of the lifting rotor 200 is very complex and is a result of compound action of aerodynamic force, friction force, centrifugal force, and deformation-resistant force of the structure, and the advancing blades and retreating blades are in different stress conditions owing to the different air flow conditions; therefore, the second rotation speed, which is the lowest rotation speed for maintaining stable rotation of the rotor, e.g., 100rpm, varies with the take-off weight and forward speed of the entire aircraft and the comprehensive parameters of the lifting rotor 200, and fluctuates in value even for the same aircraft model. Here, the attack angle of the rotor disc may be tuned to maintain the lifting rotor 200 in a stable low speed autorotation state; alternatively, the motor or engine speed of the lifting rotor 200 may be controlled to drive the lifting rotor 200 in a stable low speed rotation state (near the second rotation speed); in such a case, since the rotation speed is low, the driving moment for maintaining the low speed rotation of the lifting rotor 200 is very low, it is unnecessary to provide a reactive torque by means of the difference in thrust force between the thrust propellers 400 on the two sides of the fuselage 100; instead, the reactive torque may be balanced, for example, by small deflection of the yaw rudder, as shown in Fig. 16. The lifting force in the vertical direction is fully provided by the wings 300; the forward thrust force on the entire aircraft is provided by the thrust propellers 400. At that point, the pitch and roll attitude control of the entire aircraft is realized in a conventional fixed-wing aircraft adjustment mode (the ailerons 310 and the elevator are deflected); the yaw control is mainly realized by the deflection of the yaw rudder.

Specifically, in the gyrocopter state, the attack angle of the rotor disc is increased so that the rotor disc is tilted backward, the lifting rotor 200 rotates in the air flow passing through the rotor disc from bottom to top to provide all lifting force in the vertical direction, and the thrust propellers 400 rotate to provide forward thrust force. This state is not the state of flight in conventional missions, by is an emergency state that occurs when the power of the lifting rotor 200 of the aircraft fails and the aircraft can't fly in the helicopter mode anymore, and may be defined as the lowest forward speed state when the lifting rotor 200 rotates. In this state, the attack angle of the rotor disc is adjusted to a maximum value, the air flow passes through the rotor disc from bottom to top to maintain the rotation speed of the rotor; since the forward speed is low, the lifting rotor 200 provides the vast majority of lifting force, and the rotation speed of the lifting rotor 200 is lower than the rotation speed in the helicopter mode, and the rotation speed and force are adjusted by adjusting the attack angle of the rotor disc. The forward thrust force on the entire aircraft is provided by the thrust propellers 400. In this state, the pitch and roll attitude control of the entire aircraft is realized mainly by adjusting the included angle between the rotor disc and the horizontal plane; the yaw control is realized mainly realized by the deflection of the yaw rudder 630 and/or the difference in thrust force between the thrust propellers 400.

The characteristics of the above-mentioned flight states are compared as follows:
Helicopter hovering state: when the incoming air flow rate is zero or low, the lifting rotor 200 is driven by motor and/or engine to provide all lifting force required for the entire aircraft, and the lifting force provided by the wings 300 is negligible;
Compound helicopter state: when the incoming air flow rate is not zero, the lifting rotor 200 is driven by motor and/or engine to provide a part of the lifting force required for the entire aircraft, and the wings 300 provide the remaining part of the lifting force required for the entire aircraft;
Gyrocopter state: when the incoming air flow rate is not zero, the lifting rotor 200 rotates to provide all lifting force required for the entire aircraft, and the lifting force provided by the wings 300 is negligible;
Compound gyrocopter state: when the incoming air flow rate is not zero, the lifting rotor 200 rotates to provide a part of the lifting force required for the entire aircraft, and the wings 300 provide the remaining part of the lifting force required for the entire aircraft;
Fixed-wing cruising state: when the incoming air flow rate is not zero, the lifting rotor 200 is fully unloaded, and the wings 300 provide all lifting force required for the entire aircraft.

The following table provides description on the comparison among the flight states (wherein, forward speed V4>V3>V2>V5>V1).

| **Name of state** | **Helicopter hovering state** | **Compound helicopter state** | **Compound gyrocopter state** | **Fixed-wing cruising state** | **Gyrocopter state** |
|---|---|---|---|---|---|
| **Forward flight speed (incoming air flow rate)** | Zero forward flight speed, V1 = 0 | Low forward flight speed, V2 | High forward flight speed, V3 | Cruising speed, V4 | Low forward flight speed, V5 |
| **Vertical lift** | Lifting rotor | Lifting rotor + wings | Lifting rotor + wings | Wings | Lifting rotor |
| **Forward thrust** | None | Horizontal component of the force of the lifting rotor + thrust propellers | Thrust propellers | Thrust propellers | Thrust propellers |
| **Anti-torque device** | Thrust propellers | Thrust propellers | None | None | None |
| **State of the lifting rotor** | Actively driving; the rotor disc is generally horizontal; the rotation speed is high: first rotation speed | Actively driving; the rotor disc is tilted forward or horizontal; the rotation speed is high: first rotation speed | Autorotation; the rotor disc is tilted backward; the rotation speed is relatively high (between the first rotation speed and the second rotation speed) | Autorotati on; the rotor disc is generally horizontal; the rotation speed is the lowest: second rotation speed | Autorotati on; the rotor disc is tilted backward, and the attack angle is maximum; the rotation speed is relatively high (between the first rotation speed and the second rotation speed) |
| **State of the thrust propellers** | Provide thrust forces in the same magnitude in opposite directions | Provide differential thrust force to balance the rotor torque | Provide thrust forces in the same magnitude in the same direction | Provide thrust forces in the same magnitude in the same direction | Provide thrust forces in the same magnitude in the same direction |
| **Attitude control (pitch and roll)** | Tilting of the rotor disc of the lifting rotor | Tilting of the rotor disc of the lifting rotor (primary) + deflection of the ailerons and elevator (secondary) | Deflection of the ailerons and elevator (primary) + tilting of the rotor disc of the lifting rotor (secondary) | Deflection of the ailerons and the elevator | Tilting of the rotor disc of the lifting rotor |
| **Yaw control (yaw)** | Difference in thrust force between the thrust propellers | Difference in thrust force between the thrust propellers (primary) + deflection of the yaw rudder (secondary) | Deflection of the yaw rudder (primary) + difference in thrust force between the thrust propellers (secondary) | Deflection of the yaw rudder | Difference in thrust force between the thrust propellers + deflection of the yaw rudder |

The transition of the aircraft among the flight states will be described below.

The aircraft can be transited between the compound helicopter state and the helicopter hovering state.

When the aircraft is transited from the helicopter hovering state to the compound helicopter state, the collective pitch of the thrust propellers 400 is increased or the rotor disc is controlled to be tilted forward to obtain forward speed, the lifting rotor 200 is always kept in an actively driving state, and the reactive torque generated by the lifting rotor 200 is balanced by the differential thrust force resulted from the difference in the collective pitch between the left thrust propellers 400 and the right thrust propellers 400; as the incoming air flow rate is increased, the collective pitch of the lifting rotor 200 is decreased gradually to decrease the force of the lifting rotor 200, and the lifting rotor 200 is always maintained in the first rotation speed state. The basic operation logic is as follows: the pilot or controller obtains forward speed by increasing the collective pitch of the thrust propellers 400 or controlling the forward tilt of the rotor disc, or obtains forward speed by increasing the collective pitch of the thrust propeller 400 and controlling the forward tilt of the rotor disc simultaneously; in the process, the lifting rotor 200 is always maintained in an actively driving state, and the reactive torque generated by the lifting rotor 200 is balanced off by the difference in the thrust force generated by the difference in the collective pitch between the left thrust propellers 400 and the right thrust propellers 400; as the incoming air flow rate is increased, the lifting force provided by the wings 300 is increased, and the lifting rotor 200 is gradually unloaded partially; the pilot or controller decreases the force of the lifting rotor 200 by gradually decreasing the collective pitch of the lifting rotor 200, and the lifting rotor 200 is always maintained rotating at a speed near the first rotation speed.

When the aircraft is transited from the compound helicopter state to the helicopter hovering state, the collective pitch of the thrust propellers 400 is decreased to decrease the forward thrust force, the forward speed of the aircraft is gradually decreased, the lifting rotor 200 is always in the actively driving state, and the reactive torque generated by the lifting rotor 200 is balanced by the difference in the collective pitch between the left thrust propellers 400 and the right thrust propellers 400; as the forward speed is decreased, the collective pitch of the lifting rotor 200 is increased gradually to increase the force of the lifting rotor 200 and maintain the lifting rotor 200 always in the first rotation speed state. The basic operation logic is as follows: the pilot or controller decreases the forward thrust force to a value smaller than the resistance on the aircraft by decreasing the collective pitch of the thrust propeller 400; as the thrust force is decreased, the forward speed of the aircraft is gradually decreased; when it is required to decrease the forward speed of the aircraft rapidly, the pilot or controller may decelerate the aircraft by controlling the backward tilt of the rotor disc and decreasing the collective pitch of the thrust propellers 400 simultaneously, or decrease the forward speed by controlling the thrust propellers 400 to provide reverse thrust force if necessary. In the process, the lifting rotor 200 is always in the actively driving state, and the reactive torque generated by the lifting rotor 200 is balanced off by the difference in the collective pitch between the left thrust propellers 400 and the right thrust propellers 400; as the forward speed is decreased, the lifting force provided by the wings 300 are gradually decreased to a negligible value; the pilot or controller may gradually increase the collective pitch of the lifting rotor 200 to increase the force of the lifting rotor 200 and always maintain the lifting rotor 200 in the first rotation speed state; the lifting rotor 200 is gradually loaded till it provides all lifting force required for the entire aircraft.

The aircraft can be transited between the compound helicopter state and the fixed-wing cruising state.

When the aircraft is transited from the compound helicopter state to the fixed-wing cruising state, the collective pitch of the thrust propellers 400 is increased to increase the forward thrust force, or the collective pitch of the thrust propellers 400 is increased and rotor disc is adjusted to be tilted forward to increase the forward thrust force, so as to increase the forward speed; as the lifting rotor 200 is gradually unloaded, the collective pitch of the lifting rotor 200 is gradually decreased to zero-lift collective pitch (at that point, the lifting force is 0), and the rotor disc is adjusted to a horizontal state, the rotation speed of the lifting rotor 200 is decreased from the first rotation speed to the second rotation speed. The basic operation logic is as follows: the pilot or controller increases the forward thrust force by increasing the collective pitch of the thrust propellers 400, or, in the initial stage, the pilot or controller may increase the forward thrust force by increasing the collective pitch of the thrust propellers 400 and increasing the forward tilt of the rotor disc simultaneously, so as to increase the forward speed; as the forward speed is increased, the wings 300 provide more and more lifting force required for the entire aircraft, the lifting rotor 200 is further unloaded till it is fully unloaded, at that point, the wings 300 provide all lifting force required for the entire aircraft; in the process, the lifting rotor 200 is always maintained in a driven state till it is fully unloaded, and the reactive torque generated by the lifting rotor 200 is balanced off by the difference in the collective pitch between the left thrust propellers 400 and the right thrust propellers 400; as the lifting rotor 200 is gradually unloaded, the pilot or controller gradually decrease the collective pitch of the lifting rotor 200 to zero-lift collective pitch, and the rotor disc is adjusted to a horizontal state; the rotation speed of the lifting rotor 200 is decreased from the first rotation speed to the second rotation speed.

When the aircraft is transited from the fixed-wing cruising state to the compound helicopter state, the collective pitch of the thrust propellers 400 is decreased to decrease the forward thrust force so as to decrease the forward speed, and, at the same time, the lifting rotor 200 is drive to increase the rotation speed from the second rotation speed state to the first rotation speed state; as the forward speed is gradually decreased, the lifting force provided by the lifting rotor 200 is increased by gradually increasing the collective pitch of the lifting rotor 200. The basic operation logic is as follows: the pilot or controller decreases the collective pitch of the thrust propeller 400 to decrease the forward thrust force and thereby decrease the forward speed; at the same time, the lifting rotor 200 is driven to increase the rotation speed from the second rotation speed state to the first rotation speed state, and the reactive torque generated by the lifting rotor 200 is balanced off by the difference in the collective pitch between the left thrust propellers 400 and the right thrust propellers 400; as the forward speed is gradually decreased, the lifting force provided by the wings 300 is gradually decreased, the lifting rotor 200 is gradually loaded, and the lifting force provided by the lifting rotor 200 is increased by gradually increasing the collective pitch of the lifting rotor 200.

The aircraft can be transited between the compound helicopter state and the compound gyrocopter state.

When the aircraft is transited from the compound helicopter state to the compound gyrocopter state, the power input to the lifting rotor is cut off (or the main power fails suddenly), the collective pitch of the lifting rotor 200 is decreased, while the collective pitch of the thrust propellers 400 is increased, so as to increase the forward thrust force and thereby increase and maintain the forward speed, the attack angle of the rotor disc is adjusted so that the incoming air flow passes through the rotor disc from bottom to top, and the lifting rotor 200 is transited from the actively driving state to an autorotation state. The basic operation logic is as follows: when the pilot or controller cuts off the power input to the lifting rotor 200 (or the main power fails suddenly), the collective pitch of the lifting rotor 200 is decreased rapidly, while the collective pitch of the thrust propeller 400 is increased to increase the forward thrust force and thereby increase or maintain the forward speed; the attack angle of the rotor disc is adjusted so that the incoming air flow passes through the rotor disc from bottom to top, and the lifting rotor 200 is changed from the actively driving state to an autorotation state; before the state transition, the lifting rotor 200 is driven actively and rotates at the first rotation speed, and the reactive torque generated by the lifting rotor 200 is provided by the difference in the collective pitch between the left thrust propellers 400 and the right thrust propellers 400; after the power input to the lifting rotor 200 is cut off, no reactive torque is generated anymore, the collective pitches of the thrust propellers 400 are controlled to be the same value, and the thrust propellers 400 provide forward thrust force simultaneously, and the rotation speed of the lifting rotor 200 is decreased from the first rotation speed state to a horizontal autorotation state. When the aircraft is transited from the compound gyrocopter state to the compound helicopter state, power is inputted to the lifting rotor 200, the collective pitch of the lifting rotor 200 is increased, and the rotation speed of the lifting rotor 200 is increased to the first rotation speed; the reactive torque generated by the lifting rotor 200 is balanced by the difference in the collective pitch between the left thrust propellers 400 and the right thrust propellers 400, and the attack angle of the rotor disc is adjusted continuously to control a balanced attitude of the aircraft. The basic operation logic is as follows: the pilot or controller switches on the power input to the lifting rotor 200 and increases the collective pitch of the lifting rotor 200 rapidly, the lifting rotor 200 is changed from the autorotation state to the actively driving state, and the rotation speed of the lifting rotor 200 is increased from the speed in the autorotation state to a speed near the first rotation speed; the reactive torque generated by the lifting rotor 200 is balanced by the difference in the collective pitch between the left thrust propellers 400 and the right thrust propellers 400, and the attack angle of the rotor disc of the lifting rotor 200 is adjusted continuously to control a balanced attitude of the aircraft.

The aircraft can be transited between the fixed-wing cruising state and the compound gyrocopter state between.

When the aircraft is transited from the fixed-wing cruising state to the compound gyrocopter state, the thrust force of the thrust propellers 400 is decreased to decrease the flight speed, the collective pitch of the lifting rotor 200 is increased and the attack angle of the rotor disc is adjusted continuously so that the incoming air flow passes through the rotor disc from bottom to top, and the rotation speed of the lifting rotor 200 is increased gradually; as the forward speed is decreased, the lifting force provided by the wings 300 is decreased gradually, the lifting rotor 200 is loaded gradually, and the lifting rotor 200 is always in the autorotation state. The basic operation logic is as follows: the pilot or controller controls the thrust propellers 400 to decrease the thrust force and thereby decrease the flight speed; in the process, the collective pitch of the lifting rotor 200 is increased and the attack angle of the rotor disc is adjusted continuously, so that the incoming air flow passes through the rotor disc from bottom to top, the rotation speed of the lifting rotor 200 is gradually increased; as the forward speed is decreased, the lifting rotor 200 is gradually loaded, and the lifting rotor 200 is always maintained in the autorotation state in the process.

When the aircraft is transited from the compound gyrocopter state to the fixed-wing cruising state, the collective pitch of the thrust propellers 400 is increased to increase the forward thrust force and forward speed; as the forward speed is increased, the lifting force provided by the wings 300 is increased, and the lifting rotor 200 is unloaded to a fully unloaded state; the collective pitch of the lifting rotor 200 is gradually decreased to zero-lift collective pitch, and the rotor disc is adjusted to an approximately horizontal state, the rotation speed of the lifting rotor 200 is gradually decreased to be close to the second rotation speed, and the lifting rotor 200 is always in the autorotation state. The basic operation logic is as follows: the pilot or controller increases the forward thrust force by increasing the collective pitch of the thrust propeller 400 so as to further increase the forward speed; as the forward speed is increased, the lifting force provided by the wings 300 is increased, and the lifting rotor 200 is further unloaded, till it is fully unloaded; the pilot or controller gradually decreases the collective pitch of the lifting rotor 200 to zero-lift collective pitch and adjusts the rotor disc to an approximately horizontal state, the rotation speed of the lifting rotor 200 is also gradually decreased to be close to the second rotation speed, and the lifting rotor 200 is always in the autorotation state.

The aircraft can be transited from the helicopter hovering state and the compound helicopter state to the gyrocopter state respectively.

When the aircraft is transited from the helicopter hovering state to the gyrocopter state, the power input to the lifting rotor 200 is cut off (or the main power fails suddenly), the collective pitch of the thrust propeller 400 is controlled to increase the forward thrust force and thereby increase the forward speed, the collective pitch of the lifting rotor 200 is decreased rapidly, and the attack angle of the rotor disc is adjusted continuously, so that the air flow passes through the rotor disc from bottom to top to drive the lifting rotor 200 to rotate. The basic operation logic is as follows: when the pilot or controller cuts off the power input to the lifting rotor 200 (or the main power fails suddenly), the collective pitch of the thrust propeller 400 is controlled to increase the forward thrust force and thereby increase the forward speed, the collective pitch is decreased rapidly, and the attack angle of the rotor disc is adjusted continuously, so that the air flow passes through the rotor disc from bottom to top; when the entire aircraft reaches certain forward speed, the lifting rotor 200 rotates to provide all lifting force required for the entire aircraft. At that point, since the lifting rotor 200 is in an autorotation state, the fuselage 100 is not subject to the moment of the lifting rotor 200, it is unnecessary to provide a balancing torque; the thrust propellers 400 on the two sides of the fuselage 100 provide thrust forces in the same magnitude to provide forward thrust force. In addition, under special circumstances, when the aircraft suddenly loses the power of the lifting rotor 200 in the helicopter hovering state and the aircraft is above the decision altitude (the decision altitude is a safe altitude at which the entire aircraft still can be safely transited to the gyrocopter state, but below which a spinning forced landing procedure will be executed to avoid endangering the passengers), the pilot or controller should control the thrust propeller 400 in a maximum thrust state (full throttle state) to increase the forward speed rapidly, and should decrease the collective pitch rapidly simultaneously and adjust the attack angle of the rotor disc continuously, so that the air flow passes through the rotor disc from bottom to top to drive the rotor to rotate and force the aircraft to enter into the gyrocopter state; in the process, the attitude of the entire aircraft is maintained by adjusting the attack angle of the rotor disc.

When the aircraft is transited from the compound helicopter state to the gyrocopter state, the collective pitch of the lifting rotor 200 is decreased, and the forward speed is maintained or increased by increasing the collective pitch of the thrust propellers 400; the attack angle of the rotor disc is adjusted, so that the incoming air flow passes through the rotor disc from bottom to top, and the lifting rotor 200 is transited from the actively driving state to the autorotation state; wherein the attitude of the entire aircraft is controlled by adjusting the attack angle of the rotor disc. The basic operation logic is as follows: when the pilot or controller actively cuts off the power input to the lifting rotor 200 or the lifting rotor 200 loses power, the collective pitch of the lifting rotor 200 is decreased rapidly; at the same time, the forward speed is maintained or increased by increasing the collective pitch of the thrust propellers 400; the attack angle of the rotor disc is adjusted, so that the incoming air flow passes through the rotor disc from bottom to top, and the lifting rotor 200 is changed from the actively driving state to the autorotation state; in that process, the attitude of the entire aircraft is maintained by adjusting the attack angle of the rotor disc.

The aircraft can be transited between the compound gyrocopter state and the gyrocopter state.

When the aircraft is transited from the compound gyrocopter state to the gyrocopter state, the thrust force of the thrust propellers 400 is decreased to decrease the forward speed; as the forward speed is decreased, the lifting force provided by the wings 300 is decreased gradually, and the lifting rotor 200 is loaded gradually; the lift force of the lifting rotor 200 is controlled by controlling the attack angle of the rotor disc and/or the collective pitch of the lifting rotor 200, wherein the attack angle of the rotor disc and the collective pitch of the lifting rotor 200 are increased gradually. The basic operation logic is as follows: the pilot or controller decreases the forward speed by decreasing the thrust force of the thrust propellers 400; as the forward speed is decreased, the lifting force provided by the wings 300 is gradually decreased, and the lifting rotor 200 is gradually loaded; the force of the lifting rotor 200 may be controlled by controlling the attack angle of the rotor disc of the lifting rotor 200 only, or by controlling the attack angle of the rotor disc and gradually increasing the collective pitch in combination; in the entire process, the attack angle of the rotor disc and the collective pitch (if the collective pitch is adjusted) are in a tendency of increase.

When the aircraft is transited from the gyrocopter state to the compound gyrocopter state, the thrust force of the thrust propellers 400 is increased to increase the forward speed; as the forward speed is increased, the lifting force provided by the wings 300 is increased gradually; the force of the lifting rotor 200 is controlled by controlling the attack angle of the rotor disc and/or the collective pitch of the lifting rotor 200, wherein the attack angle of the rotor disc and the collective pitch of the lifting rotor 200 are decreased gradually. In the two states, the lifting rotor 200 is always in the autorotation state; the main difference lies in: in the gyrocopter state, since the forward speed is low, the wings 300 provide little or even no lifting force; in the compound gyrocopter state, the wings 300 provides partial lifting force, which varies as the forward speed varies. The basic operation logic is as follows: the pilot or controller increases the forward speed by increasing the thrust force of the thrust propeller 400; the lifting force provided by the wings is gradually increased as the forward speed is increased; the force of the lifting rotor 200 may be controlled by controlling the attack angle of the rotor disc of the lifting rotor 200 only, or by controlling the attack angle of the rotor disc and gradually decreasing the collective pitch in combination; in the entire process, the attack angle of the rotor disc and the collective pitch (if the collective pitch is adjusted) are in a tendency of decrease.

In addition, please see Fig. 13, which shows a schematic diagram of the paths of state transition of the aircraft from different states to the gyrocopter state.

Moreover, the aircraft can be transited from different states to the cruising flight state, and there are a variety of paths of state transition, as shown in Figs. 9-12.

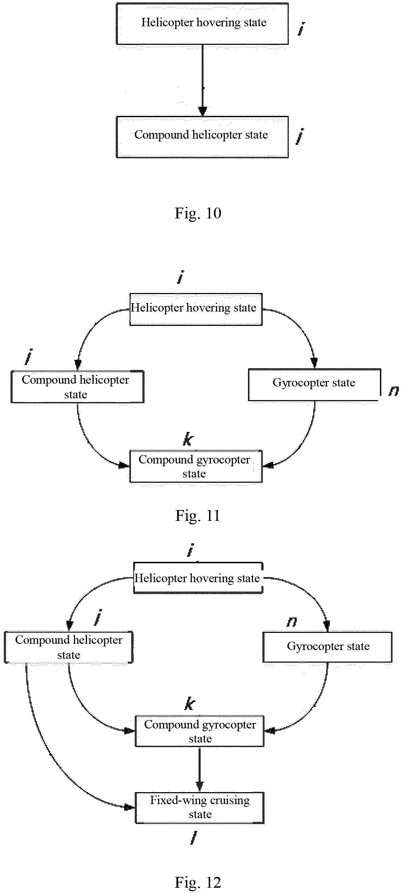

As shown in Fig. 10, the aircraft can take off and land vertically to the helicopter hovering state, and then can be transited to the compound helicopter state, and cruise in the compound helicopter state.

In addition, as shown in Fig. 11, the aircraft can take off and land vertically to the helicopter hovering state, and can be transited in any of the following ways to the compound gyrocopter state and cruise in the compound gyrocopter state:
the aircraft is transited from the helicopter hovering state to the compound helicopter state first and then transited from the compound helicopter state to the compound gyrocopter state, and cruises in the compound gyrocopter state;
the aircraft is transited from the helicopter hovering state to the gyrocopter state first and then transited from the gyrocopter state to the compound gyrocopter state, and cruises in the compound gyrocopter state.

Moreover, as shown in Fig. 12, the aircraft can take off and land vertically to the helicopter hovering state, and can be transited in any of the following ways to the fixed-wing cruising state and cruise in the fixed-wing cruising state:
the aircraft is transited from the helicopter hovering state to the compound helicopter state first and then transited from the compound helicopter state to the fixed-wing cruising state, and cruises in the fixed-wing cruising state;
the aircraft is transited from the helicopter hovering state to the compound helicopter state first and then transited from the compound helicopter state to the compound gyrocopter state, and finally transited from the compound gyrocopter state to the fixed-wing cruising state and cruises in the fixed-wing cruising state;
the aircraft is transited from the helicopter hovering state to the gyrocopter state first and then transited from the gyrocopter state to the compound gyrocopter state, and finally transited from the compound gyrocopter state to the fixed-wing cruising state and cruises in the fixed-wing cruising state.

In the case of power failure of the lifting rotor 200, the aircraft provided by the present invention can be transited from normal state of the aircraft to the gyrocopter state, in which the attack angle of the rotor disc is increased and the rotor disc is tilted backward, the lifting rotor 200 can rotate in the air flow passing through the rotor disc from bottom to top, and the thrust propeller 400 rotates to provide forward thrust force.

In the technical scheme, if the power of the lifting rotor 200 fails in the normal flight state of the aircraft, the aircraft still can fly in a variety of flight modes owing to the action of the thrust propellers 400, and the aircraft can land in the gyrocopter state at the landing site; thus, the safety performance of the aircraft is improved.

In the gyrocopter state, i.e., the lowest forward speed state in the autorotation state of the lifting rotor 200, the attack angle of the rotor disc is increased, for example, to the maximum value, and the air flow passes through the rotor disc from bottom to top to maintain the rotation speed of the lifting rotor 200. In this state, since the forward speed is low, the lifting rotor 200 provides the vast majority of the lifting force, the rotation speed of the lifting rotor 200 is lower than the rotation speed in the helicopter mode, and the rotation speed and force can be adjusted by adjusting the attack angle of the rotor disc. The forward thrust force on the entire aircraft is provided by the thrust propellers 400. In this state, the pitch and roll attitude control of the entire aircraft is realized mainly by adjusting the attack angle of the rotor disc; the yaw control is mainly realized by the deflection of the yaw rudder 630 on the tail part of the fuselage 100.

As shown in Fig. 13 and Fig. 2, the normal state of the aircraft comprises a helicopter hovering state i, in which the lifting rotor 200 rotates at the first rotation speed, the rotor disc is kept horizontal to provide the lifting force in the vertical direction, the collective pitch of the thrust propeller 400 is adjusted according to the real-time reactive torque generated by the lifting rotor 200 to balance the real-time reactive torque; in the case of power failure of the lifting rotor 200, the aircraft may be transited from the helicopter hovering state i to a gyrocopter state n (as shown in Fig. 6) through logical operation 212, in which the collective pitch of the thrust propellers 400 is controlled to increase the forward thrust force and thereby increase the forward speed, the attack angle of the rotor disc is increased and the collective pitch of the lifting rotor 200 is decreased at the same time, so that the air flow passes through the rotor disc from bottom to top to drive the lifting rotor 200 to rotate, thereby the aircraft is transited from the helicopter hovering state to the gyrocopter state directly. At that point, the aircraft flies in the gyrocopter state n, and can land in the gyrocopter state n at the landing site, thereby the safety performance of the aircraft is improved.

An embodiment of the logical operation 212 is as follows: the pilot or controller increases the forward thrust force and thereby increases the forward speed by controlling the collective pitch of the thrust propellers 4; when the aircraft is accelerated, the pilot or controller increases the attack angle of the rotor disc and decrease the collective pitch simultaneously, so that the air flow passes through the rotor disc from bottom to top, the driving moment of the lifting rotor 200 is provided by the air, and the driving moment provided by the air for driving the lifting rotor 200 is gradually increased as the incoming air flow rate is increased; when the entire aircraft reaches certain forward speed, the air can provide all driving moment required for the lifting rotor 200; at that point, the lifting rotor 200 is in a complete autorotation state, the fuselage is not subjected to the moment of the lifting rotor 200 since the lifting rotor 200 spins, and it is unnecessary to provide a balancing torque; the thrust propellers 400 on the two sides of the fuselage provide thrust forces in the same amplitude to provide forward thrust force. Thus, the transition of the aircraft from the helicopter hovering state i to the gyrocopter state n is completed.

In addition, as shown in Fig. 13 and Fig. 3, the normal state of the aircraft comprises a compound helicopter state j, in which the lifting rotor 200 rotates at the first rotational speed, the rotor disc is tilted forward to provide forward thrust force, the collective pitch of the thrust propellers 400 is adjusted according to the real-time reactive torque generated by the lifting rotor 200 to balance the real-time reactive torque, the lifting rotor 200 and the wings 300 jointly provide the lifting force in the vertical direction, and the horizontal component of the force provided by the lifting rotor 200 and the thrust propellers 400 provide forward thrust force; in the case of power failure of the lifting rotor 200, the aircraft can be transited from the compound helicopter state j to the gyrocopter state n (as shown in Fig. 6) directly through logical operation 207, in which the collective pitch of the lifting rotor 200 is decreased, and the collective pitch of the thrust propellers 400 is increased simultaneously to maintain or increase the forward speed, the rotor disc is adjusted from the forward tilting state to a backward tilting state, so that the air flow passes through the rotor disc from bottom to top to drive the lifting rotor 200 to rotate, the lifting rotor 200 provides almost all lifting force in the vertical direction, so that the aircraft is transited from the compound helicopter state to the gyrocopter state directly. At that point, the aircraft flies in the gyrocopter state n, and can land in the gyrocopter state n at the landing site, thereby the safety performance of the aircraft is improved.

In addition, as shown in Fig. 13, in the case of power failure of the lifting rotor 200, the aircraft can be transited from the compound helicopter state j to the compound gyrocopter state k and then transited from the compound gyrocopter state k to the gyrocopter state n; in the case of power failure of the lifting rotor 200, the aircraft can be transited from the compound helicopter state j to the compound gyrocopter state k (as shown in Fig. 4) and fly in the compound gyrocopter state k through logical operation 205, in which the collective pitch of the lifting rotor 200 is decreased, and the collective pitch of the thrust propellers 400 is increased simultaneously to increase the forward thrust force, the rotor disc is adjusted from the forward tilting state to a preliminary backward tilting state, so that the air flow passes through the rotor disc from bottom to top to drive the lifting rotor 200 to rotate, the lifting rotor 200 and the wings 300 jointly provide the lifting force in the vertical direction, so that the aircraft is transited from the compound helicopter state j to the compound gyrocopter state k; in the compound gyrocopter state k, the rotor disc is inclined backward preliminarily, the air flow passes through the rotor disc from bottom to top to drive the lifting rotor 200 to rotate, the lifting rotor 200 and the wings 300 jointly provide the lifting force in the vertical direction; as the forward speed is increased, the wings 300 provide more and more lifting force, and the rotation speed of the lifting rotor 200 is decreased gradually; the aircraft may be further transited from the compound gyrocopter state k to the gyrocopter state n (as shown in Fig. 6) through logical operation 211, in which the collective pitch of the thrust propellers 400 is decreased to decrease the forward thrust force; as the forward speed is decreased, the rotor disc is further adjusted to be further tilted backward, till the lifting rotor 200 provide almost all lifting force in the vertical direction, so that the aircraft is transited from the compound gyrocopter state k to the gyrocopter state n. At that point, the aircraft flies in the gyrocopter state n, and can land in the gyrocopter state at the landing site, thereby the safety performance of the aircraft is improved.

Moreover, as shown in Fig. 13, the normal state of the aircraft comprises a compound gyrocopter state k, as shown in Fig. 4, in which the rotor disc is tilted backward preliminarily, the air flow passes through the rotor disc from bottom to top to drive the lifting rotor 200 to rotate, and the lifting rotor 200 and the wings 300 jointly provide the lifting force in the vertical direction; as the forward speed is increased, the wings 300 provide more and more lifting force, and the rotation speed of the lifting rotor 200 is gradually decreased; in the case of power failure of the lifting rotor 200, the aircraft can be transited from the compound gyrocopter state k to the gyrocopter state n (as shown in Fig. 6) directly through logical operation 211, in which the thrust force of the thrust propeller 400 is decreased to decrease the forward speed, the lifting force provided by the wings 300 is gradually decreased, the rotor disc is adjusted to a backward tilting state to increase the attack angle of the rotor disc, till the lifting rotor 200 provides almost all lifting force in the vertical direction, so that the aircraft is transited from the compound gyrocopter state k to the gyrocopter state n directly.

Moreover, as shown in Fig. 13, the normal state of the aircraft further comprises a fixed-wing cruising state 1; in the case of power failure of the lifting rotor 200, the aircraft can be transited from the fixed-wing cruising state 1 to the compound gyrocopter state k and then transited from the compound gyrocopter state k to the gyrocopter state n; in the fixed-wing cruising state 1, as shown in Fig. 5, the collective pitch of the lifting rotor 200 is adjusted to be close to zero-lift collective pitch, the plane of rotation of the rotor disc is maintained in a horizontal or approximately horizontal state, the lifting rotor 200 rotates at the lowest rotation speed, the wings 300 provide all lifting force in the vertical direction, and the thrust propellers 400 provide forward thrust force for the entire aircraft; in the case of power failure of the lifting rotor 200, the aircraft can be transited from the fixed-wing cruising state 1 to the compound gyrocopter state k (as shown in Fig. 4) through logical operation 209, in which the thrust force of the thrust propellers 400 is decreased, the collective pitch of the lifting rotor 200 is increased, and the backward tilting of the rotor disc is increased continuously to increase the attack angle of the rotor disc and thereby increase the rotation speed of the lifting rotor 200, so that the aircraft is transited from the fixed-wing cruising state 1 to the compound gyrocopter state k. At that point, the aircraft can fly in the compound gyrocopter state, and then can be transited to the gyrocopter state n through the logical operation 211; now, the aircraft flies in the gyrocopter state n, and can land in the gyrocopter state n at the landing site; thus, the safety performance of the aircraft is improved.

In addition, in the fixed-wing cruising state 1, the backward tilting rotor disc is approximately horizontal so that the lifting rotor 200 rotates at the lowest rotation speed and/or the lifting rotor 200 is driven by the driving device of the aircraft to rotate at the lowest rotation speed, so that the entire aircraft is in an optimal lift-drag ratio state.

In addition, as shown in Fig. 13, in the fixed-wing cruising state 1, the real-time reactive torque generated by the lifting rotor 200 is balanced only by the deflection of the yaw rudder 630 on the tail part of the fuselage 100, and the thrust propellers 400 provide forward thrust force for the entire aircraft.

In addition, as shown in Fig. 13, in the gyrocopter state n, the heading of the aircraft is controlled by the deflecting the yaw rudder 630 on the tail part of the fuselage 100 and/or controlling the difference in thrust force between the left thrust propellers 400 and the right thrust propellers 400, so as to improve the yaw control performance in the low speed state.

Moreover, in order to improve the safety of the aircraft in the gyrocopter state n, as shown in Fig. 6, the attack angle of the rotor disc may be set to the maximum value according to the actual requirement in the gyrocopter state n, and may be further adjusted by adjusting the attitude of the entire aircraft, to maintain the rotation speed of the lifting rotor 200 in the low forward speed state so as to maintain the lifting force.

For example, when the aircraft suddenly loses the power of the lifting rotor 200 in the helicopter hovering state i and the aircraft is above the decision altitude (the decision altitude is a safe altitude at which the entire aircraft still can be safely transited to the gyrocopter state n, but below which a spinning forced landing procedure will be executed to avoid endangering the passengers), the pilot or controller should control the thrust propeller 400 in a maximum thrust state (full throttle state) so as to increase the forward speed rapidly, and should decrease the collective pitch of the lifting rotor 200 rapidly and continuously adjust the attack angle of the rotor disc of the lifting rotor 200 at the same time, so that the air flow passes through the rotor disc from bottom to top to drive the lifting rotor 200 to rotate at a high speed, thereby the aircraft is transited to the gyrocopter state n.

While the present invention is described above in some preferred embodiments, the present invention is not limited to those preferred embodiments. Any modification, equivalent replacement, and improvement made without departing from the spirit and principle of the present invention shall be deemed as falling into the scope of protection of the present invention.

## Claims

1. A compound rotor aircraft, comprising a fuselage (100), a lifting rotor (200), wings (300), and thrust propellers (400), wherein
the fuselage (100) has a cabin for pilots and passengers;
the lifting rotor (200) is configured to drive the fuselage (100) to move in the vertical direction, and can adjust its collective pitch and the attack angle of the rotor disc;
a plurality of wings (300) are provided and arranged symmetrically on the two sides of the fuselage (100);
a plurality of thrust propellers (400) are provided and arranged on the plurality of wings (300) respectively, and are configured to provide horizontal thrust force to the fuselage (100) to drive the aircraft to move in the horizontal direction.

2. The compound rotor aircraft according to claim 1, wherein the aspect ratio λ of the wing (300) meets λ≥10.

3. The compound rotor aircraft according to claim 1, wherein pitch of the thrust propellers(400) can be ajusted.

4. The compound rotor aircraft according to claim 1, comprising a driving mechanism, which comprises a reducer (510) and a clutch (520), wherein an output shaft of the reducer (510) can rotate at a first speed, the clutch (520) is connected with the output shaft and is configured as follows: the clutch (520) is connected with the lifting rotor (200) when the rotation speed of the lifting rotor (200) is smaller than or equal to the first speed; the clutch (520) is rotor disconnected from the lifting rotor (200) when the rotation speed of the lifting rotor (200) is greater than the first speed.

5. The compound rotor aircraft according to claim 4, wherein the lifting rotor (200) comprises a rotor shaft (210), a plurality of blades (220), and a plurality of counterweights in one-to-one correspondence with the plurality of blades (220); the rotor shaft (210) is connected with the driving mechanism, the plurality of blades (220) are connected on the rotor shaft (210) respectively, and the counterweight is arranged at one end of each blade (220) away from the rotor shaft (210).

6. The compound rotor aircraft according to claim 1, wherein the rear side of the wing is provided with an aileron, which is pivotally connected to the wing via a pivot shaft in the span direction of the wing.

7. The compound rotor aircraft according to claim 1, comprising tail wings (600) arranged on the tail portion of the fuselage (100); and/or a landing gear (700) arranged on the bottom of the fuselage (100), wherein the landing gear (700) comprises a fairing that can reduce the air resistance on the landing gear (700).

8. The compound rotor aircraft according to claim 1, capable of flying in helicopter hovering state, compound helicopter state, compound gyrocopter state, fixed-wing cruising state, and gyrocopter state respectively;
in the helicopter hovering state, the lifting rotor (200) rotates at a first rotation speed, the rotor disc is kept in a horizontal state and provides lifting force in the vertical direction, and the collective pitch of the thrust propellers (400) is adjusted according to the real-time reactive torque generated by the lifting rotor (200) to balance the torque;
in the helicopter hovering stage, the real-time reactive torque generated by the lifting rotor (200) may be balanced by the thrust propellers (400) on one side or by generating thrust forces in the same magnitude in opposite directions by the thrust propellers (400) on the two sides;
in the compound helicopter state, the lifting rotor (200) rotates at a first rotation speed, the rotor disc is tilted forward to provide a part of forward thrust force, the collective pitch of the thrust propellers (400) is adjusted according to the real-time reactive torque generated by the lifting rotor (200) to balance the torque, the lifting rotor (200) and the wings (300) provide lifting force in the vertical direction together, and the component of the force provided by the lifting rotor (200) in the horizontal direction and the thrust propellers (400) provide forward thrust force;
in the compound gyrocopter state, the rotor disc is tilted backward preliminarily, the air flow passes through the rotor disc from bottom to top to drive the lifting rotor (200) to rotate, and the lifting rotor (200) and the wings (300) provide lifting force in the vertical direction together; the lifting force provided by the wings (300) is increased as the forward speed is increased, the lifting force provided by the lifting rotor (200) is decreased and the rotation speed of the lifting rotor (200) is decreased by decreasing the collective pitch of the lifting rotor (200) and the tilt angle of the rotor disc;
in the fixed-wing cruising state, the collective pitch of the lifting rotor (200) is adjusted to zero-lift collective pitch, the rotor disc is kept in an approximately horizontal state, the lifting rotor (200) rotates at a minimum rotation speed, the wings (300) provides all lifting force in the vertical direction, and the thrust propellers (400) provide forward thrust force for the entire apparatus;
in the gyrocopter state, the attack angle of the rotor disc is increased so that the rotor disc is tilted backward, the lifting rotor (200) rotates in the air flow passing through the rotor disc from bottom to top, the lifting rotor (200) provides almost all lifting force in the vertical direction, and the thrust propellers (400) rotate to provide forward thrust force.

9. The compound rotor aircraft according to claim 8, capable of transiting between the compound helicopter state and the helicopter hovering stage,
wherein when the aircraft is transited from the helicopter hovering state to the compound helicopter state, the collective pitch of the thrust propellers (400) is increased or the rotor disc is controlled to be tilted forward to obtain forward speed, the lifting rotor (200) is always kept in an actively driving state, and the reactive torque generated by the lifting rotor (200) is balanced by the differential thrust force resulted from the difference in the collective pitch between the left thrust propellers and the right thrust propellers ; as the incoming air flow rate is increased, the wings (300) start to provide partial lifting force, which is increased gradually; the collective pitch of the lifting rotor (200) is decreased gradually to decrease the lift force of the lifting rotor (200), and the lifting rotor (200) is always kept rotating at the first rotation speed;
and wherein when the aircraft is transited from the compound helicopter state to the helicopter hovering state, the collective pitch of the thrust propellers (400) is decreased to decrease the forward thrust force, the forward speed of the aircraft is gradually decreased, the lifting rotor (200) is always in the actively driving state, and the reactive torque generated by the lifting rotor (200) is balanced by the difference in the collective pitch between the left thrust propellers (400) and the right thrust propellers (400); as the forward speed is decreased, the lifting force generated by the wings (300) is gradually decreased to zero, the collective pitch of the lifting rotor (200) is gradually increased to increase the lift force of the lifting rotor (200), and the lifting rotor (200) is always kept rotating at the first rotation speed.

10. The compound rotor aircraft according to claim 8, capable of transiting between the compound helicopter state and the fixed-wing cruising state,
wherein when the aircraft is transited from the compound helicopter state to the fixed-wing cruising state, the collective pitch of the thrust propellers (400) is increased to increase the forward thrust force, or the collective pitch of the thrust propellers (400) is increased and rotor disc is adjusted to be tilted forward to increase the forward thrust force, so as to increase the forward speed; as the forward speed is increased, the lifting force provided by the wings (300) is increased, the lifting rotor (200) is unloaded gradually, the collective pitch of the lifting rotor (200) is gradually decreased to zero-lift collective pitch and the rotor disc is adjusted to an approximately horizontal state, the rotation speed of the lifting rotor is decreased from the first rotation speed to a second rotation speed;
and wherein when the aircraft is transited from the fixed-wing cruising state to the compound helicopter state, the collective pitch of the thrust propellers (400) is decreased to decrease the forward thrust force so as to decrease the forward speed, and, at the same time, the lifting rotor (200) is drive to increase the rotation speed from the second rotation speed state to the first rotation speed state; as the forward speed is deceased gradually, the lifting force provided by the wings (300) is decreased gradually, and the lifting force provided by the lifting rotor (200) is increased by gradually increasing the collective pitch of the lifting rotor (200).

11. The compound rotor aircraft according to claim 8, capable of transiting between the compound helicopter state and the compound gyrocopter state,
where when the aircraft is transited from the compound helicopter state to the compound gyrocopter state, the power input to the lifting rotor is cut off or the power of the lifting rotor (200) fails, the collective pitch of the lifting rotor (200) is decreased, while the collective pitch of the thrust propellers (400) is increased, so as to increase the forward thrust force and thereby increase and maintain the forward speed, the attack angle of the rotor disc is adjusted so that the incoming air flow passes through the rotor disc from bottom to top, and the lifting rotor (200) is transited from the actively driving state to an autorotation state;
and wherein when the aircraft is transited from the compound gyrocopter state to the compound helicopter state, power is inputted to the lifting rotor (200), the collective pitch of the lifting rotor (200) is increased, and the rotation speed of the lifting rotor (200) is increased to the first rotation speed; the reactive torque generated by the lifting rotor (200) is balanced by the difference in the collective pitch between the left thrust propellers (400) and the right thrust propellers (400), and the attack angle of the rotor disc is adjusted continuously to control a balanced attitude of the aircraft.

12. The compound rotor aircraft according to claim 8, capable of transiting between the fixed-wing cruising state and the compound gyrocopter state;
wherein when the aircraft is transited from the fixed-wing cruising state to the compound gyrocopter state, the thrust force of the thrust propellers (400) is decreased to decrease the flight speed, the collective pitch of the lifting rotor (200) is increased and the attack angle of the rotor disc is adjusted continuously so that the incoming air flow passes through the rotor disc from bottom to top, and the rotation speed of the lifting rotor (200) is increased gradually; as the forward speed is decreased, the lifting force provided by the wings (300) is decreased gradually, the lifting rotor (200) is loaded gradually, and the lifting rotor (200) is always in the autorotation state;
and wherein when the aircraft is transited from the compound gyrocopter state to the fixed-wing cruising state, the collective pitch of the thrust propellers (400) is increased to increase the forward thrust force and forward speed; as the forward speed is increased, the lifting force provided by the wings (300) is increased, and the lifting rotor (200) is unloaded to a fully unloaded state; the collective pitch of the lifting rotor (200) is gradually decreased to zero-lift collective pitch, and the rotor disc is adjusted to an approximately horizontal state, the rotation speed of the lifting rotor (200) is gradually decreased to be close to the second rotation speed, and the lifting rotor (200) is always in the autorotation state.

13. The compound rotor aircraft according to claim 8, capable of transiting from the helicopter hovering state and the compound helicopter state to the gyrocopter state respectively;
wherein when the aircraft is transited from the helicopter hovering state to the gyrocopter state, the power input to the lifting rotor (200) is cut off or the power of the lifting rotor (200) fails, the collective pitch of the thrust propellers (400) is controlled to increase the forward thrust force so as to increase the forward speed, while the attack angle of the rotor disc is increased and the collective pitch of the lifting rotor (200) is decreased, so that the air flow passes through the rotor disc from bottom to top to drive the rotor disc to rotate, and the lifting rotor (200) is transited from the actively driving state to the autorotation state, wherein the attitude of the entire aircraft is controlled and maintained by adjusting the attack angle of the rotor disc;
wherein when the aircraft is transited from the compound helicopter state to the gyrocopter state, the power input to the lifting rotor (200) is cut off or the power of the lifting rotor (200) fails, the collective pitch of the lifting rotor (200) is decreased and the collective pitch of the thrust propellers (400) is increased to maintain or increase the forward speed; the attack angle of the rotor disc is adjusted so that the incoming air flow passes through the rotor disc from bottom to top, and the lifting rotor (200) is transited from the actively driving state to the autorotation state; wherein the attitude of the entire aircraft is controlled by adjusting the attack angle of the rotor disc.

14. The compound rotor aircraft according to claim 8, capable of transiting between the compound gyrocopter state and the gyrocopter state;
wherein when the aircraft is transited from the compound gyrocopter state to the gyrocopter state, the thrust force of the thrust propellers (400) is decreased to decrease the forward speed; as the forward speed is decreased, the lifting force provided by the wings (300) is decreased gradually, and the lifting rotor (200) is loaded gradually; the lift force of the lifting rotor (200) is controlled by controlling the attack angle of the rotor disc and/or the collective pitch of the lifting rotor (200), wherein the attack angle of the rotor disc and the collective pitch of the lifting rotor (200) are increased gradually;
and wherein when the aircraft is transited from the gyrocopter state to the compound gyrocopter state, the thrust force of the thrust propellers (400) is increased to increase the forward speed; as the forward speed is increased, the lifting force provided by the wings (300) is increased gradually, and the lifting rotor (200) is unloaded gradually; the lift force of the lifting rotor (200) is controlled by controlling the attack angle of the rotor disc and the collective pitch of the lifting rotor (200), wherein the attack angle of the rotor disc and the collective pitch of the lifting rotor (200) are decreased gradually.

15. The compound rotor aircraft according to claim 8, capable of taking off and landing vertically to the helicopter hovering state and then transiting to the compound helicopter state and cruising in the compound helicopter state;
preferably, the compound rotor aircraft capable of taking off and landing vertically to the helicopter hovering state and transiting to the compound gyrocopter state in any of the following ways and cruising in the compound gyrocopter state:
the aircraft is transited from the helicopter hovering state to the compound helicopter state first and then transited from the compound helicopter state to the compound gyrocopter state, and cruises in the compound gyrocopter state;
the aircraft is transited from the helicopter hovering state to the gyrocopter state first and then transited from the gyrocopter state to the compound gyrocopter state, and cruises in the compound gyrocopter state;
preferably, the compound rotor aircraft capable of taking off and landing vertically to the helicopter hovering state, and transiting to the fixed-wing cruising state in any of the following ways and cruising in the fixed-wing cruising state:
the aircraft is transited from the helicopter hovering state to the compound helicopter state first and then transited from the compound helicopter state to the fixed-wing cruising state, and cruises in the fixed-wing cruising state;
the aircraft is transited from the helicopter hovering state to the compound helicopter state first and then transited from the compound helicopter state to the compound gyrocopter state, and finally transited from the compound gyrocopter state to the fixed-wing cruising state and cruises in the fixed-wing cruising state;
the aircraft is transited from the helicopter hovering state to the gyrocopter state first and then transited from the gyrocopter state to the compound gyrocopter state, and finally transited from the compound gyrocopter state to the fixed-wing cruising state and cruises in the fixed-wing cruising state;
preferably, the compound rotor aircraft capable of transiting from the helicopter hovering state, the compound helicopter state, the compound gyroplane state and the fixed-wing cruising state to the gyrocopter state and continuing the flight safely in the case that the power of the lifting rotor (200) fails.
